# EUROPÄISCHE PATENTANMELDUNG

(11) **EP 4 300 877 A1**
(43) Veröffentlichungstag der Anmeldung: **03.01.2024**
(21) Anmeldenummer: 22181863.6
(22) Anmeldetag: 29.06.2022
(51) Int. Cl.: H04L 9/40, G06F 9/455

(54) **VERFAHREN ZUR STEUERUNG VERTEILTER ANWENDUNGEN HETEROGENER NETZWERKE UND NETZWERK-SYSTEMSTEUERUNG**

(71) Anmelder: Siemens Aktiengesellschaft, 80333 München (DE)
(72) Erfinder: Bode, Sebastian, 59229 Ahlen (DE); Niedermeier, Christoph, 80999 München (DE)
(74) Vertreter: Siemens Patent Attorneys

(57) **Zusammenfassung**

Um verteilte Anwendungen heterogener Netzwerke, bei dem unter Sicherheitsaspekten die Sicherheit der verteilten Anwendungen des Netzwerks durch die Berücksichtigung von Eigenschaften einer sich z.B. durch Virtualisierung dynamisch verändernden Netzwerktopologie so verbessert und erhöht wird, dass den Anwendungen, welche in einer virtualisierten Umgebung zum Ablauf gebracht werden, ermöglicht wird, Schutzmaßnahmen zur Sicherung der Kommunikationsbeziehungen entsprechend den Anforderungen der genutzten Verbindung ergreifen zu können, zu steuern, wird es vorgeschlagen, dass mit der Steuerung der verteilten Anwendungen, bei dem die Anwendungen (AWD) in mindestens einem Netzwerk (NW1, NW2, NW3, NW4) auf eine Vielzahl von Hosts (HST1_{NW1}, HST2_{NW1}, HST3_{NW1}, HST4_{NW1}, HST1_{NW2}, HST2_{NW2}, HST3_{NW2}, HST1_{NW3}, HST2_{NW3}, HST1_{NW4}) verteilt sowie auf Virtualisierungsebenen (VTE) der Hosts über eine Vielzahl von virtuellen Netzwerkschnittstellen (NWSS) der Virtualisierungsebenen host- und netzwerkimmanent oder über eine Vielzahl von virtuellen Netzwerkschnittstellen der Virtualisierungsebenen und Kopplungselementen (KLE1, KLE2, KLE3, KLE4, KLE5, KLE6, KLE7) zwischen den Hosts netzwerkimmanent und/oder netzwerkübergreifend, insbesondere unter Internet-Einbeziehung (INT), miteinander verbunden werden, (**i**) für jede Anwendung (AWD) jeweils eine verschiedene Anzahl von dedizierten Netzwerkschnittstellen (NWSS_{1,d}, NWSS_{2,d}, NWSS_{3,d}, NWSS_{4,d}) aus der Vielzahl der virtuellen Netzwerkschnittstellen bereitgestellt wird (bts), (**ii**) Garantien in Bezug auf Netzwerktopologie-Attribute (NWTA) zu den dedizierten Netzwerkschnittstellen zugeordnet werden (zdn) und (**iii**) Anwendungsanfragen zur Anwendungsverbindung und/oder anwendungsverbindungsbasierten Austauschen von Datenpaketen unter Kommunikationsgesichtspunkten gemäß der garantiebezogenen Netzwerktopologie-Attribute gemanagt werden (mgn).

## Beschreibung

Die Erfindung bezieht sich auf ein Verfahren zur Steuerung verteilter Anwendungen heterogener Netzwerke gemäß dem Oberbegriff des Patentanspruches 1 und auf eine Netzwerk-Systemsteuerung zur Steuerung verteilter Anwendungen heterogener Netzwerke gemäß dem Oberbegriff des Patentanspruches 7.

Mit der zunehmenden Virtualisierung z.B. in Form der Nutzung von Containertechnologien und Microservice-Architekturen ändern sich Netzwerktopologien sehr dynamisch und sind für eine einzelne Anwendung, beispielsweise einen einzelnen Microservice bzw. Container nicht einsehbar. Der Grund liegt in der dynamischen Zuordnung von Anwendungen zu Recheneinheiten, welche in einer virtualisierten Umgebung durch eine Orchestrierungsplattform, wie z.B. eine "Docker"-Containerplattform, die wegen der virtualisierten Umgebung auch als Virtualisierungsebene betrachtet werden kann, vorgenommen wird. Damit trotz dieser Zuordnung eine stabile Erreichbarkeit der einzelnen Dienste gewährleistet werden kann, stellen Orchestrierungsplattformen, Containerplattformen oder Virtualisierungsebenen virtuelle Netzwerkschnittstellen bereit, welche die tatsächlich vorhandene Netzwerktopologie verbergen.

Dies führt zu dem Problem, dass Kommunikationseinrichtungen die als Beteiligte an einer Kommunikation in der Regel keinerlei Kenntnisse über die tatsächlich genutzte Netzwerkinfrastruktur haben, obwohl die jeweils verwendete Netzwerkinfrastruktur insbesondere in heterogenen Umgebungen erhebliche Bedeutung für die Sicherheit der übertragenen Daten hat. Aufgrund fehlender Informationen ist es in solchen heterogenen Netzwerken schwer, adäquate Sicherheitsmaßnahmen zu ergreifen, also solche Maßnahmen, die einerseits so wenig Ressourcen wie möglich nutzen, dabei aber andererseits das notwendige Sicherheitsniveau einhalten.

Gerade für die Anwendung auf eingeschränkten Geräten, wie beispielsweise Edge-Controllern oder allgemein Feldgeräten, kann die Einsparung von Ressourcen von hoher Relevanz sein.

Deshalb kann sich die Situation ergeben, dass besonders sicherheitskritische Datenübertragungen sogar zwischen verschiedenen Kommunikationseinrichtungen stattfinden können und wegen der damit verbundenen größeren Bedrohung durch aufwendige Verschlüsselungsmaßnahmen gesichert werden müssen.

Nach dem derzeitigen Stand der Technik ist es üblich, all diejenigen Sicherheitsmaßnahmen zu implementieren, welche auch unter den ungünstigsten anzunehmenden Bedingungen ein ausreichendes Maß an Sicherheit bieten. Dieser Ansatz löst die in heterogenen Netzwerken auftretende und vorstehend skizzierte Problematik jedoch streng genommen nicht, sondern sieht einfach immer mehr Aufwendungen vor als tatsächlich erforderlich sind.

Ein Ansatz, das Problematik tatsächlich zu lösen, ist es, eine geringere Dynamik bzw. Heterogenität zu erzwingen, indem beispielsweise die Menge der verfügbaren Recheneinheiten auf der Orchestrierungsplattform, Containerplattform bzw. Virtualisierungsebene aufgeteilt wird, sodass eine sichere Trennung zwischen besonders sensiblen Anwendungen und besonders gefährlichen Anwendungen geschaffen werden kann. Ein solcher Ansatz erfordert oft einen höheren administrativen Aufwand und bedeutet in jedem Fall eine schlechtere Gesamtauslastung, da die ungenutzten Ressourcen in jedem Abschnitt einen größeren relativen Anteil ausmachen.

Die der Erfindung zugrundeliegende Aufgabe besteht darin, ein Verfahren zur Steuerung verteilter Anwendungen heterogener Netzwerke und eine Netzwerk-Systemsteuerung anzugeben, bei dem unter Sicherheitsaspekten die Sicherheit der verteilten Anwendungen des Netzwerks durch die Berücksichtigung von Eigenschaften einer sich z.B. durch Virtualisierung dynamisch verändernden Netzwerktopologie so verbessert und erhöht wird, dass den Anwendungen, welche in einer virtualisierten Umgebung zum Ablauf gebracht werden, ermöglicht wird, Schutzmaßnahmen zur Sicherung der Kommunikationsbeziehungen entsprechend den Anforderungen der genutzten Verbindung ergreifen zu können.

Diese Aufgabe wird ausgehend von dem im Oberbegriff des Patentanspruchs 1 definierten Verfahren durch die im Kennzeichen des Patentanspruches 1 angegebenen Merkmale gelöst.

Darüber hinaus wird diese Aufgabe ausgehend von der im Oberbegriff des Patentanspruchs 7 definierten Netzwerk-Systemsteuerung durch die im Kennzeichen des Patentanspruches 7 angegebenen Merkmale gelöst.

Die der Erfindung gemäß den unabhängigen Patentansprüchen 1 und 7 zugrundeliegende Idee besteht darin, dass zur Steuerung verteilter Anwendungen heterogener Netzwerke, bei dem die Anwendungen auf eine Vielzahl von Hosts von mindestens einem Netzwerk verteilt sowie auf Virtualisierungsebenen der Hosts über eine Vielzahl von virtuellen Netzwerkschnittstellen der Virtualisierungsebenen host- und netzwerkimmanent oder über eine Vielzahl von virtuellen Netzwerkschnittstellen der Virtualisierungsebenen und Kopplungselementen zwischen den Hosts netzwerkimmanent und/oder netzwerkübergreifend, insbesondere unter Internet-Einbeziehung, miteinander verbunden werden, **(i)** für jede Anwendung jeweils eine verschiedene Anzahl von dedizierten Netzwerkschnittstellen aus der Vielzahl der virtuellen Netzwerkschnittstellen bereitgestellt wird, **(ii)** Garantien in Bezug auf Netzwerktopologie-Attribute zu den dedizierten Netzwerkschnittstellen zugeordnet werden und **(iii)** Anwendungsanfragen zur Anwendungsverbindung und/oder anwendungsverbindungsbasierten Austauschen von Datenpaketen unter Kommunikationsgesichtspunkten gemäß der garantiebezogenen Netzwerktopologie-Attribute gemanagt werden.

Die host-verteilten Anwendungen sind dabei gemäß dem Anspruch 6 als "Application Software <APP>" in Containern, in Virtuelle Maschinen und/oder in Microservice-Architekturen abgeschirmt und/oder abgekapselt und werden auf einer Orchestrierungsplattform , wie z.B. eine "Docker"-Containerplattform, als die Virtualisierungsebene, orchestriert.

Die Lösung tut sich dadurch hervor, dass für jede Anwendung, eine Reihe von Netzwerkschnittstellen bereitgestellt wird, die jeweils mit individuellen Garantien bezüglich bestimmter Eigenschaften der Netzwerktopologie verbunden sind.

Die Garantien werden dabei in vorteilhafter Weise z.B. über Mechanismen eines Routing realisiert.

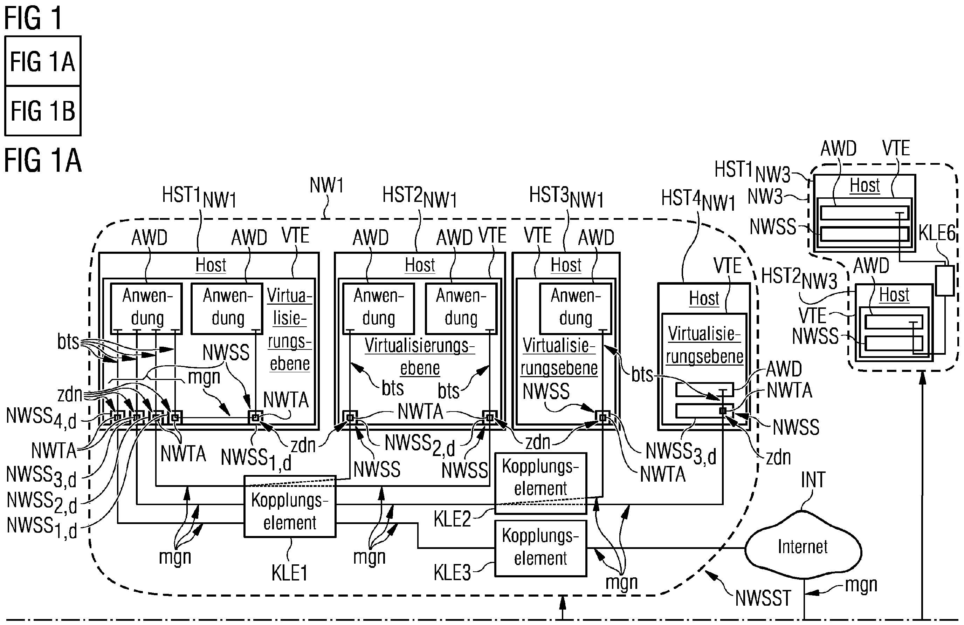

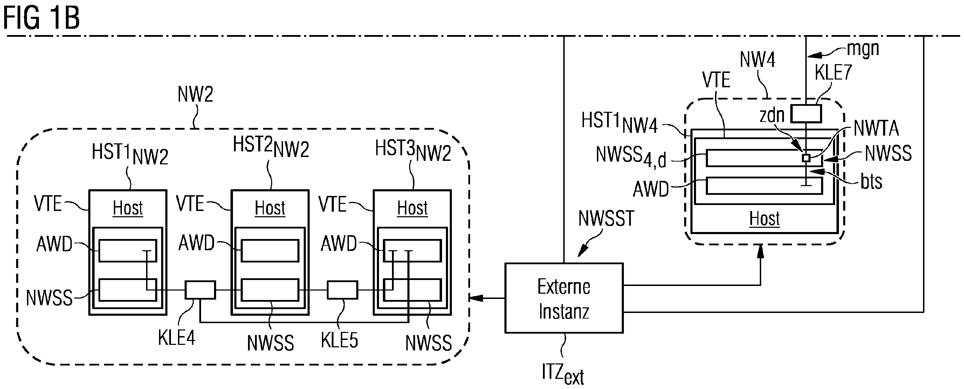

So kann beispielsweise eine Netzwerkschnittstelle vorgesehen sein, welche einen Austausch von Daten nur mit Anwendungen erlaubt, welche sich auf einer gleichen physischen Recheneinheit, dem gleichen Host, befinden. Eine weitere Netzwerkschnittstelle könnte so eingerichtet sein, dass über sie Daten nur über vertrauenswürdige Switches und vertrauenswürdige Hosts in einem eigenen "Virtual Local Area Network <VLAN>" übertragen werden. Eine dritte Netzwerkschnittstelle könnte so eingerichtet sein, dass ein Datenaustausch mit allen Recheneinheiten eines Standorts und ein und demselben Netzwerk, nicht jedoch mit Recheneinheiten an einem anderen Standort und einem anderen Netzwerk möglich ist (vgl. FIGUR 1).

Eine Anwendung kann nun unterschiedliche Anfragen, jeweils über diejenige Netzwerkschnittstelle versenden, welche mit ausreichenden Garantien verbunden ist. Kommt eine Verbindung nicht zustande, weil die angefragte Gegenstelle über diese Netzwerkschnittstelle nicht erreichbar ist, muss auf eine andere Netzwerkschnittstelle mit geringeren Garantien gewechselt und das Sicherheitsniveau der Daten durch Maßnahmen der Anwendung gewährleistet werden. So könnte beispielsweise vorgesehen sein, dass zunächst versucht wird eine Anfrage mittels "Hypertext Transfer Protocol <http>" über eine erste Netzwerkschnittstelle zu übertragen, und für den Fall, dass dies fehlschlägt, dieselbe Anfrage über eine andere Netzwerkschnittstelle per "Hypertext Transfer Protocol Secure <HTTPS>" zu stellen, also einen zusätzlichen per "Transport Layer Security <TLS>" gesicherten Kanal aufzubauen.

Konkret kann beispielsweise eine Netzwerkschnittstelle, welche nur den Datenaustausch innerhalb einer physischen Recheneinheit erlaubt, realisiert werden, indem ein sogenanntes Bridge-Netzwerkgerät auf dem Host erzeugt wird. Ein Netzwerk, welches die Kommunikation nach außen erlaubt, würde, z.B. bei einer auf Linux-basierenden Implementierung, zusätzlich eine "iptables"-Regel mit einem sogenannten "Masquerade"-Eintrag in einer Postrouting-Chain bekommen und über Routing Einträge würde für die unterschiedlichen Netzwerke je ein anderer bzw. kein Router eingetragen und somit die Weiterleitung verhindert.

Außerdem würde ein Host selbsttätig Veränderungen am Netzwerk und bei den laufenden Containern, Virtuellen Maschinen und/oder Microservice-Architekturen überwachen sowie beispielsweise Bridge-Netzwerken, für die garantiert ist, dass Daten nur an vertrauenswürdige Container, Virtuellen Maschinen und/oder Microservice-Architekturen gesendet werden, herunterfahren, bevor ein nicht vertrauenswürdiger Container, eine nicht vertrauenswürdige Virtuelle Maschine und/oder eine nicht vertrauenswürdige Microservice-Architektur gestartet wird bzw. der nicht vertrauenswürdiger Container, die nicht vertrauenswürdige Virtuelle Maschine und/oder die nicht vertrauenswürdige Microservice-Architektur mit diesem Bridge-Netzwerk nicht verbinden.

Darüber hinaus kann auch vorgesehen sein, dass der Host Pakete für die unterschiedlichen Netzwerke mit verschiedenen "Virtual Local Area Network <VLAN>"-Tags versieht und somit das Routing in externen Switches beeinflusst.

Die Erfindung zeichnet sich als Bereicherung des bisherigen Stand der Technik dadurch aus, dass im Rahmen der vorgeschlagenen Idee einer einzelnen Anwendung mittels Netzwerkschnittstellen Informationen über die tatsächliche physische Netzwerktopologie zur Verfügung gestellt werden. Dadurch, dass weiterhin Garantien über ein Routing, das Verwenden von Übertragungskanälen, in dem heterogenen Netzwerk gewährleistet werden, kann auf Veränderungen der Netzwerktopologie, z.B. ein weiteres Gerät an das Netzwerk angeschlossen wird, unmittelbar reagiert werden, indem Netzwerkrouten, welche betroffen sind, unmittelbar deaktiviert werden. Eine Anwendung bekommt so automatisch eine Rückmeldung, vorzugsweise in Form eines Fehlers beim nächsten Übermittlungsversuch, falls diese Änderung für sie relevant. Eine unbeabsichtigte Nutzung oder Weiternutzung nicht ausreichend sicherer oder nicht mehr ausreichend sicherer Verbindungen wird verhindert.

Die Bereicherung besteht zudem darin, dass aufwendige Sicherheitsmaßnahmen wie Verschlüsselung von Datenübertragungen nicht pauschal für jede Verbindung zwischen Anwendungen vorgenommen werden, sondern dass dies nur in denjenigen Fällen geschieht, in denen andere Maßnahmen, wie die Beschränkung auf lokale Übertragungskanäle des Host oder in dem Netzwerk, nicht für ein ausreichendes Maß an Sicherheit sorgen können. Dadurch wird die Belastung von Rechen- und Netzwerk-Ressourcen für Sicherheitszwecke auf das erforderliche Maß reduziert.

In der früheren, unveröffentlichten EP-Patentanmeldung mit der Anmeldungsnummer 22178790.6 ist ein "Verfahren zur Erhöhung der Sicherheit verteilter Anwendungen durch ein den Sicherheitsanforderungen Rechnung tragendes Deployment" offenbart, das als alternative Lösung zu dem vorstehend skizzierten und in den Ansprüchen 1 bis 6 beanspruchten Verfahren kombinierbar ist. Die Kombination beider Verfahren führt zu einer weiteren Verbesserung der Sicherheit bei gleichzeitiger Minimierung des Einsatzes aufwendigerer Sicherheitsmaßnahmen.

Die der vorliegenden Erfindung zugrundeliegende Idee hat den technischen Effekt, dass jede Anwendung Maßnahmen zur Erhöhung der IT-Sicherheit entsprechend den Erfordernissen einer bestimmten Route in der heterogenen Netzwerkumgebung umsetzen kann. Eine Anwendung kann somit dahingehend programmiert werden, dass bei bestimmten Verbindungseigenschaften bestimmte IT-Sicherheitsmaßnahmen ergriffen werden, indem jeder dedizierten Netzwerkschnittstelle ein potenziell leerer Satz an IT-Sicherheitsmaßnahmen zugeordnet wird, dessen einzelnen Maßnahmen bei Nutzung jeder dieser dedizierten Netzwerkschnittstellen umzusetzen sind.

Sollten keine besonderen Sicherheitsmaßnahmen erforderlich sein, kann der Anwendung ein leerer Satz an Sicherheitsmaßnehmen zugeordnet werden. Jede Anwendung kann dann versuchen, eine Verbindung zunächst über eine der dedizierten Netzwerkschnittstellen herzustellen, bei der keine oder nur einfache IT-Sicherheitsmaßnahmen zu ergreifen sind, und beim Scheitern eines Verbindungsaufbaus auf eine andere der dedizierten Netzwerkschnittstelle ausweichen, die gegebenenfalls weitergehende Sicherheitsmaßnahmen erfordert.

Da so nur eine reduzierte Zahl von Kommunikationsverbindungen mittels aufwendiger IT-Sicherheitsmaßnahmen geschätzt werden muss, kann bei gleichbleibendem Ressourcenverbrauch ein höheres Schutzniveau erreicht werden oder es können bei gleichbleibendem Schutzniveau aufgrund der Ressourcenkapazität verfügbare Ressourcen besser ausgenutzt werden. Gerade für die Anwendung auf die eingeschränkten Geräte, wie den Edge-Controllern oder den Feldgeräten, kann die Einsparung von Ressourcen von hoher Relevanz sein.

Das hostbasierte Netzwerk ist vorzugsweise ein Automatisierungssystem, das z.B. als eine Produktionsanlage, eine Fabrik, ein Rechenzentrum, eine Forschungsanlage, ein Gebäudesystem und/oder ein Verkehrsleit- und Kontrollsystem ausgebildet sein kann.

Eine Kommunikationsbeziehung umfasst vorzugsweise eine Kommunikation zwischen zwei Anwendungen, also ein Übertragen von Daten zwischen zwei Anwendungen. Das Übertragen der Daten kann bidirektional oder unidirektional zwischen den zwei Anwendungen erfolgen.

Vorteilhafte Weiterbildungen dieser Idee sind in den Unteransprüchen angegeben.

So ist gemäß Anspruch 2 von Vorteil, wenn die garantiebezogenen Netzwerktopologie-Attribute durch Routing-Mechanismen zugeordnet werden.

Darüber hinaus ist es gemäß Anspruch 3 vorteilhaft, wenn die garantiebezogenen Netzwerktopologie-Attribute zur Zulassung der Anwendung für ein dediziertes Netzwerk des mindestens einen Netzwerks zugeordnet werden, indem die um die Zulassung nachsuchende Anwendung
- die Berechtigung für die Zulassung durch ein Zertifikat nachweist,
- die Berechtigung für die Zulassung durch eine externe Instanz übermittelt wird,
- die Berechtigung für die Zulassung von der Virtualisierungsebene der um die Zulassung nachsuchenden Anwendung durch eine Analyse der Anwendung, insbesondere durch das Bilden eines Hash-Wertes oder das Auslesen von Metadaten der Anwendung, erlangt wird.

Weiterhin ist es gemäß dem Anspruch 4 von Vorteil, wenn die garantiebezogenen Netzwerktopologie-Attribute in Attributklassen, eine Attributklasse für anwendungsbezogene Eigenschaften, eine Attributklasse für hostbezogene Eigenschaften und/oder eine Attributklasse für netzwerkbezogene Eigenschaften unterteilt werden.

Ferner ist es gemäß dem Anspruch 5 vorteilhaft, dass "Virtual Local Area Network <VLAN>"-Tags den Datenpakete bei dem netzwerkübergreifenden Austausch von dem an dem Austausch betroffenen Host zugewiesen werden.

Weitere Vorteile der Erfindung ergeben sich aus der nachfolgenden Beschreibung eines Ausführungsbeispiels der Erfindung anhand einer FIGUR erläutert.

Die FIGUR zeigt ein Szenario zur Steuerung verteilter Anwendungen heterogener Netzwerke. Das dargestellte Szenario besteht aus vier Netzwerke NW1, NW2, NW3, NW4, wobei es aber auch mehr oder weniger bis zu einem einzigen Netzwerk sein können. In jedem dieser Netzwerke NW1, NW2, NW3, NW4 ist mindestens ein z.B. als Recheneinheit ausgebildeter Host, in dem jeweils z.B. ein Server enthalten ist.

So enthalten
- ein erstes Netzwerk NW1 vier Hosts, einen ersten NW1-bezogenen Host HST1_{NW1}, einen zweiten NW1-bezogenen Host HST2_{NW1}, einen dritten NW1-bezogenen Host HST3_{NW1} und einen vierten NW1-bezogenen Host HST4_{NW1},
- ein zweites Netzwerk NW2 drei Hosts, einen ersten NW2-bezogenen Host HST2_{NW2}, einen zweiten NW2-bezogenen Host HST2_{NW2} und einen dritten NW2-bezogenen Host HST3_{NW2},
- ein drittes Netzwerk NW3 zwei Hosts, einen ersten NW3-bezogenen Host HST1_{NW3} und einen zweiten NW3-bezogenen Host HST2_{NW3} und
- ein viertes Netzwerk NW4 einen Host, einen ersten NW4-bezogenen Host HST4_{NW1}.

Jeder dieser Hosts HST1_{NW1}, HST2_{NW1}, HST3_{NW1}, HST4_{NW1}, HST1_{NW2}, HST2_{NW2}, HST3_{NW2}, HST1_{NW3}, HST2_{NW3}, HST1_{NW4} weist eine Virtualisierungsebene VTE mit einer Vielzahl von virtuellen Netzwerkschnittstellen NWSS auf. Die Hosts HST1_{NW1}, HST2_{NW1}, HST3_{NW1}, HST4_{NW1}, HST1_{NW2}, HST2_{NW2}, HST3_{NW2}, HST1_{NW3}, HST2_{NW3}, HST1_{NW4} sind weiterhin über Kopplungselemente KLE1, KLE2, KLE3, KLE4, KLE5, KLE6, KLE7 netzwerkimmanent und/oder netzwerkübergreifend, z.B. unter Internet-Einbeziehung INT, miteinander verbunden. Bei den Kopplungselementen KLE1, KLE2, KLE3, KLE4, KLE5, KLE6, KLE7 handelt es sich vorzugsweise um bekannte Netzwerkkomponenten, wie einen Switch, einen Router oder ein Gateway.

Auf den Hosts HST1_{NW1}, HST2_{NW1}, HST3_{NW1}, HST4_{NW1}, HST1_{NW2}, HST2_{NW2}, HST3_{NW2}, HST1_{NW3}, HST2_{NW3}, HST1_{NW4} sind ferner eine Vielzahl von Anwendungen AWD verteilt, die auf den Virtualisierungsebenen VTE der Hosts über die Vielzahl der virtuellen Netzwerkschnittstellen NWSS der Virtualisierungsebenen VTE host- und netzwerkimmanent, also innerhalb eines jeden Hosts und Netzwerks, oder über die Vielzahl der virtuellen Netzwerkschnittstellen NWSS der Virtualisierungsebenen VTE und Kopplungselementen KLE1, KLE2, KLE3, KLE4, KLE5, KLE6, KLE7 zwischen den Hosts HST1_{NW1}, HST2_{NW1}, HST3_{NW1}, HST4_{NW1}, HST1_{NW2}, HST2_{NW2}, HST3_{NW2}, HST1_{NW3}, HST2_{NW3}, HST1_{NW4} netzwerkimmanent, also innerhalb eines jeden Netzwerks und/oder netzwerkübergreifend, also über die Netzwerkgrenzen hinaus, wobei diese insbesondere durch das Internet INT überschritten werden, miteinander verbunden werden.

Die auf den Hosts verteilten Anwendungen AWD sind vorzugsweise als "Application Software <APP>" in Containern, in Virtuelle Maschinen und/oder in Microservice-Architekturen abgeschirmt und/oder abgekapselt und werden auf der jeweiligen Virtualisierungsebene VTE, die z.B. eine Orchestrierungsplattform , wie z.B. eine "Docker"-Containerplattform, ist, orchestriert.

In Bezug auf das in der FIGUR dargestellte Szenario sieht eine beispielhafte Verteilung der Anwendungen AWD dermaßen aus, dass
- auf dem ersten NW1-bezogenen Host HST1_{NW1} und dem zweiten NW1-bezogenen Host HST2_{NW1} jeweils zwei Anwendungen AWD in abgeschirmter und/oder abgekapselter Form auf der jeweiligen Virtualisierungsebene VTE orchestriert werden,
- auf dem dritten NW1-bezogenen Host HST3_{NW1} und dem vierten NW1-bezogenen Host HST4_{NW1} jeweils eine Anwendungen AWD in abgeschirmter und/oder abgekapselter Form auf der jeweiligen Virtualisierungsebene VTE orchestriert wird, und
- auf dem ersten NW2-bezogenen Host HST2_{NW2}, dem zweiten NW2-bezogenen Host HST2_{NW2}, dem dritten NW2-bezogenen Host HST3_{NW2}, dem ersten NW3-bezogenen Host HST1_{NW3}, dem zweiten NW3-bezogenen Host HST2_{NW3} sowie dem ersten NW4-bezogenen Host HST1_{NW4} jeweils eine Anwendungen AWD in abgeschirmter und/oder abgekapselter Form auf der jeweiligen Virtualisierungsebene VTE orchestriert wird.

Es kann somit also auf der Virtualisierungsebene VTE eines jeden Hosts HST1_{NW1}, HST2_{NW1}, HST3_{NW1}, HST4_{NW1}, HST1_{NW2}, HST2_{NW2}, HST3_{NW2}, HST1_{NW3}, HST2_{NW3}, HST1_{NW4} mindestens eine Anwendung AWD in abgeschirmter und/oder abgekapselter Form orchestriert werden.

Für das dargestellte Szenario und stellvertretend für die Steuerung der verteilter Anwendungen AWD der heterogenen Netzwerke NW1, NW2, NW3, NW4 sollen in Bezug auf das erste Netzwerk NW1 und das vierte Netzwerk NW4 Steuerungsschritte zur host- und netzwerkimmanenten Verbindung von Anwendungen oder zur netzwerkimmanenten und/oder netzwerkübergreifenden Verbindung von Anwendungen erläutert werden.

Das erste Netzwerk NW1 und das vierte Netzwerk NW4 ist in diesem Kontext jeweils ein dediziertes Netzwerk der Netzwerke NW1, NW2, NW3, NW4.

Gemäß der host- und netzwerkimmanenten Verbindung von Anwendungen wird eine der beiden auf der Virtualisierungsebene VTE des ersten NW1-bezogenen Host HST1_{NW1} in abgeschirmter und/oder abgekapselter Form orchestrierten Anwendung AWD mit der weiteren auf der Virtualisierungsebene VTE des ersten NW1-bezogenen Host HST1_{NW1} in abgeschirmter und/oder abgekapselter Form orchestrierten Anwendung AWD verbunden.

Hierfür wird als erster Steuerungsschritt der host- und netzwerkimmanenten Verbindung für beide Anwendungen AWD auf der Virtualisierungsebene VTE des ersten NW1-bezogenen Host HST1_{NW1} jeweils eine erste dedizierte Netzwerkschnittstelle NWSS_{1,d} aus der Vielzahl der virtuellen Netzwerkschnittstellen NWSS bereitgestellt bts.

Als zweiter Steuerungsschritt der host- und netzwerkimmanenten Verbindung wird eine erste Garantie von Garantien in Bezug auf einem ersten Netzwerktopologie-Attribut von Netzwerktopologie-Attributen NWTA der ersten dedizierte Netzwerkschnittstelle NWSS_{1,d} zugeordnet zdn, wobei die garantiebezogenen Netzwerktopologie-Attribute NWTA vorzugsweise durch Routing-Mechanismen zugeordnet zdn werden.

Als dritter Steuerungsschritt der host- und netzwerkimmanenten Verbindung werden Anwendungsanfragen zur Anwendungsverbindung und/oder anwendungsverbindungsbasierten Austauschen von Datenpaketen unter Kommunikationsgesichtspunkten gemäß dem auf die erste Garantie bezogenen, ersten Netzwerktopologie-Attribut gemanagt mgn.

Gemäß der netzwerkimmanenten Verbindung von Anwendungen wird in einer ersten Ausgestaltung eine der beiden auf der Virtualisierungsebene VTE des ersten NW1-bezogenen Host HST1_{NW1} in abgeschirmter und/oder abgekapselter Form orchestrierten Anwendung AWD mit den auf der Virtualisierungsebene VTE des zweiten NW1-bezogenen Host HST2_{NW1} in abgeschirmter und/oder abgekapselter Form orchestrierten Anwendungen AWD über ein erstes Kopplungselement KLE1 der Kopplungselemente KLE1, KLE2, KLE3, KLE4, KLE5, KLE6, KLE7 verbunden.

Hierfür wird als erster Steuerungsschritt für die erste Ausgestaltung der netzwerkimmanenten Verbindung für die Anwendung AWD auf der Virtualisierungsebene VTE des ersten NW1-bezogenen Host HST1_{NW1} und den beiden Anwendungen AWD auf der Virtualisierungsebene VTE des zweiten NW1-bezogenen Host HST2_{NW1} jeweils eine zweite dedizierte Netzwerkschnittstelle NWSS_{2,d} aus der Vielzahl der virtuellen Netzwerkschnittstellen NWSS bereitgestellt bts.

Als zweiter Steuerungsschritt für die erste Ausgestaltung der netzwerkimmanenten Verbindung wird eine zweite Garantie der Garantien in Bezug auf einem zweiten Netzwerktopologie-Attribut der Netzwerktopologie-Attribute NWTA der zweiten dedizierten Netzwerkschnittstelle NWSS_{2,d} zugeordnet zdn, wobei die garantiebezogenen Netzwerktopologie-Attribute NWTA vorzugsweise durch Routing-Mechanismen zugeordnet zdn werden.

Als dritter Steuerungsschritt für die erste Ausgestaltung der netzwerkimmanenten Verbindung werden Anwendungsanfragen zur Anwendungsverbindung und/oder anwendungsverbindungsbasierten Austauschen von Datenpaketen unter Kommunikationsgesichtspunkten gemäß dem auf die zweite Garantie bezogenen, zweiten Netzwerktopologie-Attribut gemanagt mgn.

Gemäß der netzwerkimmanenten Verbindung von Anwendungen wird in einer zweiten Ausgestaltung eine der beiden auf der Virtualisierungsebene VTE des ersten NW1-bezogenen Host HST1_{NW1} in abgeschirmter und/oder abgekapselter Form orchestrierten Anwendung AWD mit der auf der Virtualisierungsebene VTE des dritten NW1-bezogenen Host HST3_{NW1} in abgeschirmter und/oder abgekapselter Form orchestrierten Anwendung AWD und der auf der Virtualisierungsebene VTE des vierten NW1-bezogenen Host HST4_{NW1} in abgeschirmter und/oder abgekapselter Form orchestrierten Anwendung AWD über das erste Kopplungselement KLE1 und eine zweites Kopplungselement KLE1 der Kopplungselemente KLE1, KLE2, KLE3, KLE4, KLE5, KLE6, KLE7 verbunden.

Hierfür wird als erster Steuerungsschritt für die zweite Ausgestaltung der netzwerkimmanenten Verbindung für die Anwendung AWD auf der Virtualisierungsebene VTE des ersten NW1-bezogenen Host HST1_{NW1}, der Anwendung AWD auf der Virtualisierungsebene VTE des dritten NW1-bezogenen Host HST3_{NW1} und der Anwendung AWD auf der Virtualisierungsebene VTE des vierten NW1-bezogenen Host HST4_{NW1} jeweils eine dritte dedizierte Netzwerkschnittstelle NWSS_{3,d} aus der Vielzahl der virtuellen Netzwerkschnittstellen NWSS bereitgestellt bts.

Als zweiter Steuerungsschritt für die zweite Ausgestaltung der netzwerkimmanenten Verbindung wird eine dritte Garantie der Garantien in Bezug auf einem dritten Netzwerktopologie-Attribut der Netzwerktopologie-Attribute NWTA der dritten dedizierten Netzwerkschnittstelle NWSS_{3,d} zugeordnet zdn, wobei die garantiebezogenen Netzwerktopologie-Attribute NWTA vorzugsweise durch Routing-Mechanismen zugeordnet zdn werden.

Als dritter Steuerungsschritt für die zweite Ausgestaltung der netzwerkimmanenten Verbindung werden Anwendungsanfragen zur Anwendungsverbindung und/oder anwendungsverbindungsbasierten Austauschen von Datenpaketen unter Kommunikationsgesichtspunkten gemäß dem auf die dritte Garantie bezogenen, dritten Netzwerktopologie-Attribut gemanagt mgn.

Gemäß der netzwerkübergreifenden Verbindung von Anwendungen wird eine der beiden auf der Virtualisierungsebene VTE des ersten NW1-bezogenen Host HST1_{NW1} in abgeschirmter und/oder abgekapselter Form orchestrierten Anwendung AWD mit der auf der Virtualisierungsebene VTE des ersten NW4-bezogenen Host HST1_{NW4} in abgeschirmter und/oder abgekapselter Form orchestrierten Anwendung AWD über ein drittes Kopplungselement KLE3 der Kopplungselemente KLE1, KLE2, KLE3, KLE4, KLE5, KLE6, KLE7, das Internet INT und ein siebtes Kopplungselement KLE7 der Kopplungselemente KLE1, KLE2, KLE3, KLE4, KLE5, KLE6, KLE7 verbunden.

Hierfür wird als erster Steuerungsschritt der netzwerkübergreifenden Verbindung für die Anwendung AWD auf der Virtualisierungsebene VTE des ersten NW1-bezogenen Host HST1_{NW1} und der Anwendung AWD auf der Virtualisierungsebene VTE des ersten NW4-bezogenen Host HST1_{NW4} jeweils eine vierte dedizierte Netzwerkschnittstelle NWSS_{4,d} aus der Vielzahl der virtuellen Netzwerkschnittstellen NWSS bereitgestellt bts.

Als zweiter Steuerungsschritt der netzwerkübergreifenden Verbindung wird eine vierte Garantie der Garantien in Bezug auf einem vierten Netzwerktopologie-Attribut der Netzwerktopologie-Attribute NWTA der vierten dedizierten Netzwerkschnittstelle NWSS_{4,d} zugeordnet zdn, wobei die garantiebezogenen Netzwerktopologie-Attribute NWTA vorzugsweise durch Routing-Mechanismen zugeordnet zdn werden.

Als dritter Steuerungsschritt der netzwerkübergreifenden Verbindung werden Anwendungsanfragen zur Anwendungsverbindung und/oder anwendungsverbindungsbasierten Austauschen von Datenpaketen unter Kommunikationsgesichtspunkten gemäß dem auf die vierte Garantie bezogenen, vierten Netzwerktopologie-Attribut gemanagt mgn.

Dabei werden vorzugsweise "Virtual Local Area Network <VLAN>"-Tags den Datenpakete bei dem netzwerkübergreifenden Austausch von dem an dem Austausch betroffenen Host HST1_{NW1}, HST1_{NW4} zugewiesen werden.

Die garantiebezogenen Netzwerktopologie-Attribute NWTA werden gemäß dem vorstehend skizzierten Szenario zur Zulassung der Anwendung AWD für das dedizierte Netzwerk NW1, NW4 der Netzwerk NW1, NW2, NW3, NW4 zugeordnet zdn, indem die um die Zulassung nachsuchende Anwendung AWD
- die Berechtigung für die Zulassung durch ein Zertifikat nachweist,
- die Berechtigung für die Zulassung durch eine externe Instanz ITZₑₓₜ, die z.B. eine Netzwerkverwaltung-Cloud sein kann, übermittelt wird, oder
- die Berechtigung für die Zulassung von der Virtualisierungsebene VTE der um die Zulassung nachsuchenden Anwendung AWD durch eine Analyse der Anwendung AWD erlangt wird.

Die Analyse der Anwendung AWD kann dabei vorzugsweise durch das Bilden eines Hash-Wertes oder das Auslesen von Metadaten der Anwendung AWD erreicht werden.

Die garantiebezogenen Netzwerktopologie-Attribute NWTA werden vorzugsweise in Attributklassen, so z.B. (i) eine Attributklasse für anwendungsbezogene Eigenschaften, (ii) eine Attributklasse für hostbezogene Eigenschaften und/oder (iii) eine Attributklasse für netzwerkbezogene Eigenschaften unterteilt.

Die Attributklasse für anwendungsbezogene Eigenschaften kann z.B. ein Herausgeber der Anwendung sein, mit Angabe einer Prüfende Stelle oder einer Konfiguration im Hinblick auf ein garantiertes Schutzniveau für verarbeitete Daten oder Schutzmaßnahmen der Anwendung.

Die Attributklasse für hostbezogene Eigenschaften kann z.B. ein Hersteller des Host, ein Betreiber des Host, eine Betriebsbedingung des Host, ein Schutzniveau des Host-Standortes und/oder eine sich durch Türkontakt zeigende (potenzielle) Anwesenheit von Personen sein.

Die Attributklasse für netzwerkbezogene Eigenschaften kann z.B. eine Zugehörigkeit einer Netzwerkschnittstelle zu einem bestimmten Netzwerk sein.

Das vorstehend, stellvertretend für die Steuerung der verteilter Anwendungen unter Heranziehung des erstens Netzwerk NW1, des vierten Netzwerk NW4 sowie der externen Instanz skizierte Szenario wird von Netzwerk-Systemsteuerung NWSST zur Steuerung verteilter Anwendungen heterogener Netzwerke umgesetzt.

## Patentansprüche

1. Verfahren zur Steuerung verteilter Anwendungen heterogener Netzwerke, bei dem die Anwendungen (AWD) auf eine Vielzahl von Hosts (HST1_{NW1}, HST2_{NW1}, HST3_{NW1}, HST4_{NW1}, HST1_{NW2}, HST2_{NW2}, HST3_{NW2}, HST1_{NW3}, HST2_{NW3}, HST1_{NW4}) von mindestens einem Netzwerk (NW1, NW2, NW3, NW4) verteilt sowie auf Virtualisierungsebenen (VTE) der Hosts über eine Vielzahl von virtuellen Netzwerkschnittstellen (NWSS) der Virtualisierungsebenen (VTE) host- und netzwerkimmanent oder über eine Vielzahl von virtuellen Netzwerkschnittstellen (NWSS) der Virtualisierungsebenen (VTE) und Kopplungselementen (KLE1, KLE2, KLE3, KLE4, KLE5, KLE6, KLE7) zwischen den Hosts (HST1_{NW1}, HST2_{NW1}, HST3_{NW1}, HST4_{NW1}, HST1_{NW2}, HST2_{NW2}, HST3_{NW2}, HST1_{NW3}, HST2_{NW3}, HST1_{NW4}) netzwerkimmanent und/oder netzwerkübergreifend, insbesondere unter Internet-Einbeziehung (INT), miteinander verbunden werden,
**gekennzeichnet durch**
- Bereitstellen (bts) von jeweils einer verschiedenen Anzahl von dedizierten Netzwerkschnittstellen (NWSS_{1,d}, NWSS_{2,d}, NWSS_{3,d}, NWSS_{4,d}) aus der Vielzahl der virtuellen Netzwerkschnittstellen (NWSS) für jede Anwendung (AWD),
- Zuordnen (zdn) von Garantien in Bezug auf Netzwerktopologie-Attribute (NWTA) zu den dedizierten Netzwerkschnittstellen (NWSS_{1,d}, NWSS_{2,d}, NWSS_{3,d}, NWSS_{4,d}),
- Managen (mgn) von Anwendungsanfragen zur Anwendungsverbindung und/oder anwendungsverbindungsbasierten Austauschen von Datenpaketen unter Kommunikationsgesichtspunkten gemäß der garantiebezogenen Netzwerktopologie-Attribute (NWTA).

2. Verfahren nach Anspruch 1, **dadurch gekennzeichnet, dass**
die garantiebezogenen Netzwerktopologie-Attribute (NWTA) durch Routing-Mechanismen zugeordnet (zdn) werden.

3. Verfahren nach Anspruch 1, **dadurch gekennzeichnet, dass**
die garantiebezogenen Netzwerktopologie-Attribute (NWTA) zur Zulassung der Anwendung (AWD) für ein dediziertes Netzwerk des mindestens einen Netzwerks (NW1, NW2, NW3, NW4) zugeordnet (zdn) werden, indem die um die Zulassung nachsuchende Anwendung (AWD)
- die Berechtigung für die Zulassung durch ein Zertifikat nachweist,
- die Berechtigung für die Zulassung durch eine externe Instanz (ITZₑₓₜ) übermittelt wird, oder
- die Berechtigung für die Zulassung von der Virtualisierungsebene (VTE) der um die Zulassung nachsuchenden Anwendung (AWD) durch eine Analyse der Anwendung (AWD), insbesondere durch das Bilden eines Hash-Wertes oder das Auslesen von Metadaten der Anwendung (AWD), erlangt wird.

4. Verfahren nach einem der Ansprüche 1 bis 3, **dadurch gekennzeichnet, dass**
die garantiebezogenen Netzwerktopologie-Attribute (NWTA) in Attributklassen, eine Attributklasse für anwendungsbezogene Eigenschaften, eine Attributklasse für hostbezogene Eigenschaften und/oder eine Attributklasse für netzwerkbezogene Eigenschaften unterteilt werden.

5. Verfahren nach einem der Ansprüche 1 bis 4, **dadurch gekennzeichnet, dass**
"Virtual Local Area Network <VLAN>"-Tags den Datenpakete bei dem netzwerkübergreifenden Austausch von dem an dem Austausch betroffenen Host (HST1_{NW1}, HST1_{NW4}) zugewiesen werden.

6. Verfahren nach einem der Ansprüche 1 bis 5, **dadurch gekennzeichnet, dass**
die host-verteilten Anwendungen (AWD) sind als "Application Software <APP>" in Containern, in Virtuelle Maschinen und/oder in Microservice-Architekturen abgeschirmt und/oder abgekapselt und werden auf einer Orchestrierungsplattform , wie z.B. eine "Docker"-Containerplattform, als die Virtualisierungsebene, orchestriert.

7. Netzwerk-Systemsteuerung (NWSST) zur Steuerung verteilter Anwendungen heterogener Netzwerke, **dadurch gekennzeichnet, dass**
Verfahrensmerkmale von einem Verfahren nach einer Ansprüche 1 bis 6 zur Durchführung des Verfahrens umgesetzt werden.
